# EUROPÄISCHE PATENTSCHRIFT

(11) **EP 0 886 595 B1**
(45) Veröffentlichungstag und Bekanntmachung des Hinweises auf die Patenterteilung: **04.10.2001**
(21) Anmeldenummer: 97914290.8
(22) Anmeldetag: 21.03.1997
(51) Int. Cl.: B60T 13/72

(54) **PNEUMATISCHER BREMSKRAFTVERSTÄRKER**
PNEUMATIC BRAKE BOOSTER
SERVOFREIN PNEUMATIQUE

(30) Priorität: 23.03.1996 DE 19611555
(43) Veröffentlichungstag der Anmeldung: 30.12.1998
(73) Patentinhaber: Continental Teves AG & Co. oHG, 60488 Frankfurt (DE)
(72) Erfinder: BAYENS, Mark, D-60488 Frankfurt am Main (DE); BERTHOLD, Thomas, D-64289 Darmstadt (DE); DROTT, Peter, D-65936 Frankfurt am Main (DE); KRÄMER, Horst, D-63128 Dietzenbach (DE)
(74) Vertreter: Dusil, Vladimir, Dipl.-Ing.
(86) Internationale Anmeldenummer: EP9701454
(87) Internationale Veröffentlichungsnummer: WO9735754

(56) Entgegenhaltungen:
- EP-A- 0 668 201
- WO-A-94/11226

## Beschreibung

Die Erfindung betrifft einen pneumatischen Bremskraftverstärker für Kraftfahrzeuge mit einem Verstärkergehäuse, dessen Innenraum durch eine bewegliche Wand in eine erste Kammer (Unterdruckkammer) und eine zweite Kammer (Arbeitskammer) unterteilt ist, sowie mit einem Steuergehäuse, in dem ein eine auf die bewegliche Wand einwirkende pneumatische Druckdifferenz steuerndes Steuerventil angeordnet ist, das einen am Steuergehäuse ausgebildeten ersten Dichtsitz, einen an einem Ventilkolben ausgebildeten zweiten Dichtsitz sowie einen an einer Hülse ausgebildeten dritten Dichtsitz aufweist, die mit einem elastischen Ventilkörper zusammenwirken, und einerseits durch eine Betätigungsstange und andererseits unabhängig von der Betätigungsstange durch einen Elektromagneten betätigbar ist, dessen Anker kraftübertragend mit dem dritten Dichtsitz zusammenwirkt, wobei der Ventilkörper auf seiner den Dichtsitzen abgewandten Seite im Steuergehäuse einen pneumatischen Raum begrenzt.

Ein derartiger Bremskraftverstärker ist z.B. aus der internationalen Patentanmeldung WO 94/11226 bekannt. Weniger vorteilhaft anzusehen ist bei dem vorbekannten Bremskraftverstärker die Wirkung von am Ventilkörper des Steuerventils durch den zweiten und den dritten Dichtsitz einerseits und die Begrenzung des erwähnten pneumatischen Raumes andererseits begrenzten Ringflächen, insbesondere bei einer Fremdansteuerung durch Einschalten des Elektromagneten, die sich auf die Verwendung des fremdansteuerbaren Bremskraftverstärkers insbesondere bei Regelprozessen störend auswirken. Eine der Ringflächen, die während der Fremdansteuerung des Bremskraftverstärkers mit einem pneumatischen Differenzdruck beaufschlagt wird, bringt eine Kraftkomponente auf, die der vom Elektromagneten aufgebrachten Fremdbetätigungskraft entgegenwirkt und die versucht, das Steuerventil zu schließen, so daß sie durch eine Erhöhung der vom Elektromagneten aufzubringenden Fremdbetätigungskraft kompensiert werden muß.

Es ist daher Aufgabe der vorliegenden Erfindung, Maßnahmen vorzuschlagen, durch die der störende Einfluß der erwähnten Kraftkomponenten eliminiert werden kann.

Diese Aufgabe wird erfindungsgemäß dadurch gelöst, daß eine ständige pneumatische Verbidung zwischen dem pneumatischen Raum und der Unterdruckkammer vorgesehen ist und daß sowohl der zweite und der dritte Dichtsitz als auch der Ventilkörper in seinem den pneumatischen Raum im Steuergehäuse begrenzenden Teil nahezu gleiche Durchmesser aufweisen, die vorzugsweise in einer Toleranzbreite von 1 mm liegen.

Der pneumatische Raum ist dabei vorzugsweise durch ein zylindrisches Teil begrenzt, das mit einer am Ventilkörper ausgebildeten Dichtlippe zusammenwirkt.

Eine vorteilhafte Weiterbildung des Erfindungsgegenstandes besteht darin, daß der Ventilkörper zwei in Betätigungsrichtung hintereinander angeordnete vorzugsweise ringförmig ausgeführte Dichtflächen aufweist, an die der erste und der dritte bzw. der zweite Dichtsitz anlegbar sind.

Die Erfindung wird in der nachfolgenden Beschreibung an einem Ausführungsbeispiel im Zusammenhang mit der beiliegenden Zeichnung näher erläutert. In der Zeichnung zeigt:

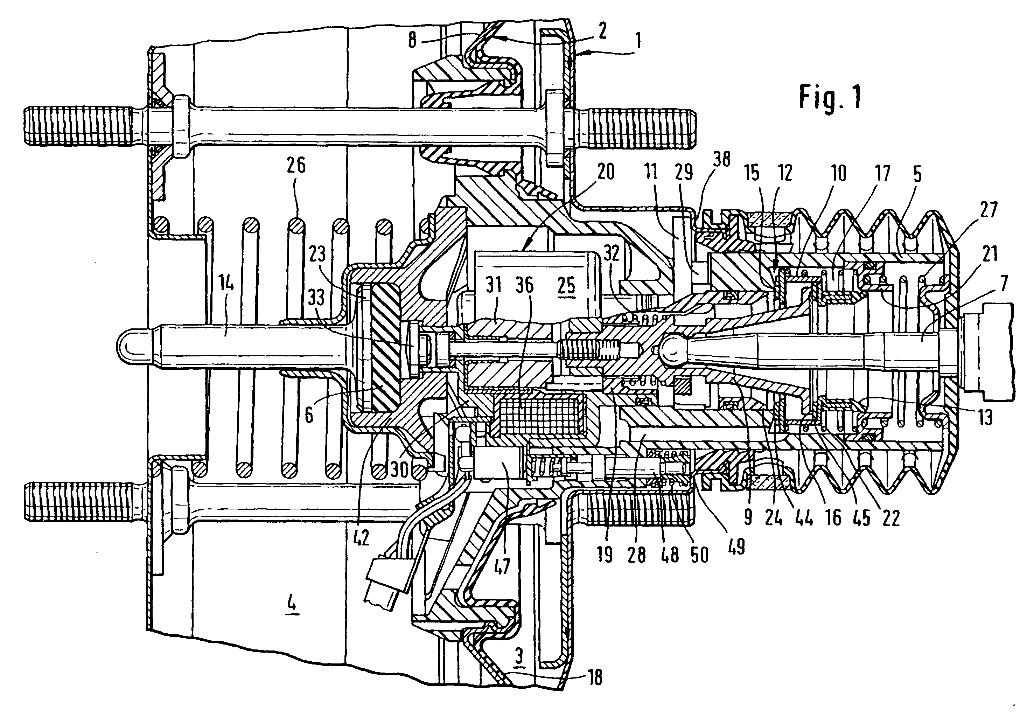

- Fig. 1: eine Ausführung des erfindungsgemäßen Bremskraftverstärkers im Längsschnitt, teilweise weggebrochen, in der inaktiven Bereitschaftsstellung,
- Fig. 2: die Steuergruppe des in Fig. 1 dargestellten Bremskraftverstärkers in der vom Fahrer eingesteuerten Vollbremsstellung;
- Fig. 3: die Steuergruppe des in Fig. 1 dargestellten Bremskraftverstärkers in der Lösestellung mit geschaltetem Elektromagneten; und
- Fig. 4: eine diagrammatische Darstellung der Kraft-Weg-Kennlinien des in Fig. 1 bis 3 dargestellten Systems.

Das lediglich schematisch angedeutete Verstärkergehäuse 1 des in der Zeichnung dargestellten erfindungsgemäßen Unterdruckbremskraftverstärkers ist durch eine axial bewegliche Wand 2 in eine Arbeitskammer 3 und eine Unterdruckkammer 4 unterteilt. Die axial bewegliche Wand 2 besteht aus einem aus Blech tiefgezogenen Membranteller 8 und einer daran anliegenden flexiblen Membran 18, die nicht näher dargestellt zwischen dem äußeren Umfang des Membrantellers 8 und dem Verstärkergehäuse 1 eine Rollmembran als Abdichtung bildet.

Ein durch eine Betätigungsstange 7 betätigbares Steuerventil 12 ist in einem im Verstärkergehäuse 1 abgedichtet geführten, die bewegliche Wand 2 tragenden Steuergehäuse 5 untergebracht und besteht aus einem am Steuergehäuse 5 ausgebildeten ersten Dichtsitz 15, einem an einem mit der Betätigungsstange 7 verbundenen Ventilkolben 9 ausgebildeten zweiten Dichtsitz 16 sowie einem mit beiden Dichtsitzen 15,16 zusammenwirkenden, in einem im Steuergehäuse 5 abgedichtet angeordneten Führungsteil 21 geführten Ventilkörper 10, der mittels einer sich am Führungsteil 21 abstützenden Ventilfeder 22 gegen die Ventilsitze 15,16 gedrückt wird. Die Arbeitskammer 3 ist mit der Unterdruckkammer 4 über einen seitlich im Steuergehäuse 5 verlaufenden Kanal 28 verbindbar.

Die Bremskraft wird über eine stirnseitig an einem Vorderteil 42 des Steuergehäuses 5 anliegende gummielastische Reaktionsscheibe 6 sowie eine einen Kopfflansch 23 aufweisende Druckstange 14 auf einen Betätigungskolben eines nicht dargestellten Hauptzylinders der Bremsanlage übertragen, der an der unterdruckseitigen Verstärkergehäusehälfte angebracht ist.

Eine in der Zeichnung schematisch dargestellte Rückstellfeder 26, die sich an der unterdruckseitigen Stirnwand des Verstärkergehäuses 1 abstützt, hält die bewegliche Wand 2 in der gezeigten Ausgangsstellung. Außerdem ist eine zweite Druckfeder bzw. Kolbenstangenrückholfeder 27 vorgesehen, die einerseits indirekt an der Betätigungsstange 7 und andererseits am Führungsteil 21 abgestützt ist und deren Kraft für eine Vorspannung des Ventilkolbens 9 bzw. seines Dichtsitzes 16 gegenüber dem Ventilkörper 10 sorgt.

Um die Arbeitskammer 3 bei der Betätigung des Steuerventils 12 mit der Atmosphäre verbinden zu können, ist schließlich im Steuergehäuse 5 ein annähernd radial verlaufender Kanal 29 ausgebildet. Die Rückkehrbewegung des Ventilkolbens 9 am Ende eines Bremsvorganges wird dabei durch ein Querglied 11 begrenzt, das in der in der Zeichnung gezeigten Lösestellung des Unterdruckbremskraftverstärkers an einem im Verstärkergehäuse 1 ausgebildeten Anschlag 38 anliegt.

Wie der Zeichnung weiter zu entnehmen ist, ist der Ventilkörper 10 zylindrisch ausgebildet und weist eine mit dem ersten Dichtsitz 15 zusammenwirkende ringförmige erste Dichtfläche 44 sowie eine mit dem zweiten Dichtsitz 16 zusammenwirkende ringförmige zweite Dichtfläche 45 auf, die in Betätigungsrichtung des Bremskraftverstärkers hintereinander angeordnet sind und gleiche Durchmesser aufweisen. Außerdem weist der Ventilkörper 10 an seinem den Dichtsitzen 15, 16 abgewandten Ende eine radial innen ausgebildete Dichtlippe 13 auf, die im montierten Zustand des Ventilkörpers 10 im Steuergehäuse 5 an dem vorhin erwähnten Führungsteil 21 dichtend anliegt, so daß im Steuergehäuse 5 ein pneumatischer Raum 17 begrenzt ist. Der vorhin erwähnte Kanal 28 verbindet dabei vorzugsweise den pneumatischen Raum 17 mit der Unterdruckkammer 4, so daß der auf der den Dichtflächen 44 und 45 abgewandten Seite des Ventilkörpers 10 ausgebildete pneumatische Raum 17 ständig der Wirkung des in der Unterdruckkammer 4 herrschenden Unterdruckes ausgesetzt ist.

Um eine von der Betätigungsstange 7 unabhängige Fremdbetätigung des erfindungsgemäßen Bremskraftverstärkers einzuleiten ist koaxial zu den Dichtsitzen 15,16 ein dritter Dichtsitz 24 vorgesehen, dessen Durchmesser sowohl dem des zweiten Dichtsitzes 16 als auch dem der den pneumatischen Raum 17 begrenzenden Dichtlippe 13 entspricht. Der dritte Dichtsitz 24 ist mittels eines Elektromagneten 20 betätigbar, der vorzugsweise in einem mit dem Ventilkolben 9 fest verbundenen Gehäuse 25 angeordnet ist und demnach zusammen mit dem Ventilkolben 9 im Steuergehäuse 5 verschiebbar ist. Der Elektromagnet 20 besteht aus einer innerhalb des Gehäuses 25 angeordneten Spule 36 sowie einem axial verschiebbar angeordneten zylindrischen Anker 31, der teilweise in einem das Gehäuse 25 verschließenden Verschlußteil 30 geführt wird und an dem sich eine Kraftübertragungshülse 19 abstützt, die den vorhin erwähnten dritten Dichtsitz 24 trägt. Zwischen dem Ventilkolben 9 und der Kraftübertragungshülse 19 ist eine Druckfeder 32 angeordnet, die den Anker 31 in seiner Ausgangslage hält, in der der dritte Dichtsitz 24 gegenüber dem am Ventilkolben 9 ausgebildeten zweiten Dichtsitz 16 axial versetzt angeordnet ist. Das im Steuergehäuse 5 geführte Verschlußteil 30 liegt unter Zwischenschaltung einer Übersetzungsscheibe 33 an der vorhin erwähnten Reaktionsscheibe 6 an und ermöglicht eine Übertragung der an der Betätigungsstange 7 eingeleiteten Eingangskraft auf die Reaktionsscheibe 6.

Bei der in der Zeichnung gezeigten Ausführung des erfindungsgemäßen Bremskraftverstärkers sind schließlich elektrische Schaltmittel 47, 48 vorgesehen, die insbesondere bei Bremsvorgängen wichtig sind, bei denen zusätzlich zur Fahrer-betätigung der Elektromagnet 20 angesteuert wird, um unabhängig vom Fahrerwillen eine Vollbremsung herbeizuführen (sog. Bremsassistentfunktion). Dabei ist von besonderer Bedeutung, daß die Schaltmittel 47, 48 bei jeder Bremsung betätigt werden. Gleichzeitig muß gewährleistet werden, daß der Elektromagnet 20 nach Beendigung des fremdkraftunterstützten Bremsvorganges sicher abgeschaltet wird. Die gezeigten Schaltmittel bestehen dabei aus einem vorzugsweise am Ventilkolben 9 bzw. dem Gehäuse 25 des Elektromagneten 20 befestigten, zwei Schaltstellungen aufweisenden Mikroschalter 47 sowie einem den Mikroschalter 47 durch eine translatorische Bewegung betätigenden Betätigungselement 48, das in einer im Steuergehäuse 5 vorgesehenen Bohrung abgedichtet geführt ist und mit einem verstärkergehäusefesten Anschlag zusammenwirkt, der das Bezugszeichen 49 trägt und beispielsweise durch einen radialen Kragen der hinteren Verstärkergehäushälfte gebildet sein kann. Zwischen dem Betätigungselement 48 und dem Steuergehäuse 5 ist eine Druckfeder 50 angeordnet, so daß das dem Mikroschalter 47 abgewandte Ende des Betätigungselements 48 unter einer Vorspannung am Anschlag 49 anliegt.

Die Funktion des hier beschriebenen bzw. dargestellten, fremdbetätigbaren Bremskraftverstärkers ist in der eingangs erwähnten internationalen Patentanmeldung genau beschrieben, so daß sie im vorliegenden Text nicht wiederholt zu werden braucht.

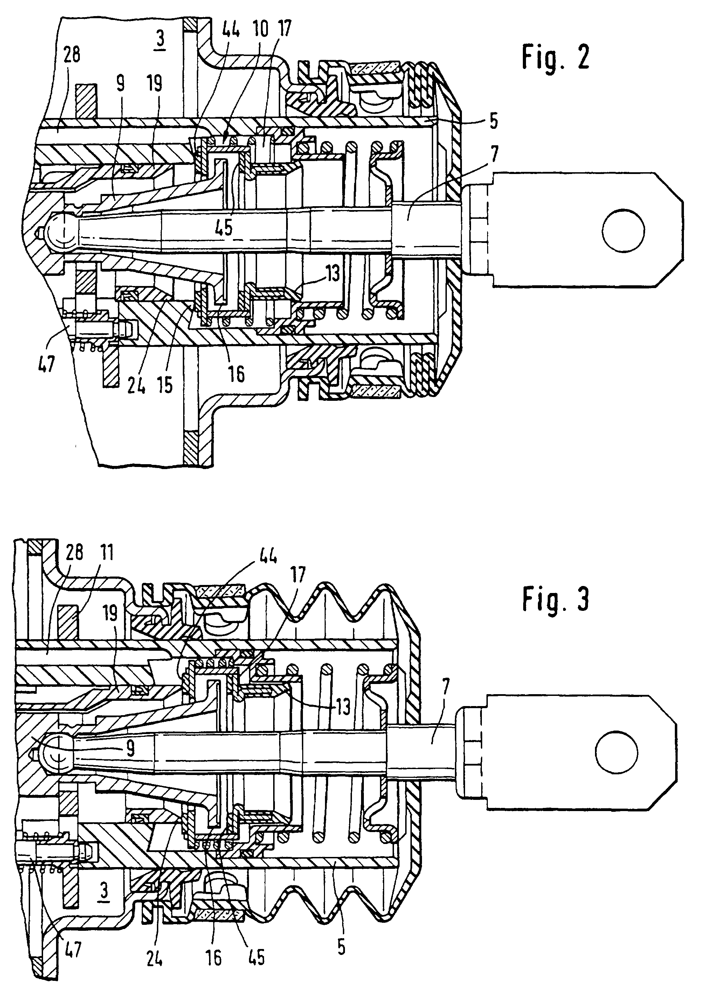

In der in Fig. 2 dargestellten, durch eine Fahrerbetätigung eingesteuerten Vollbremsstellung liegt die erste Dichtfläche 44 an dem ersten Dichtsitz 15 an, wodurch die Verbindung zwischen den beiden Kammern 3,4 des Bremskraftverstärkers unterbrochen ist. Dabei entsteht durch Verschieben des Ventilkolbens 9 in Betätigungsrichtung zwischen der zweiten Dichtfläche 45 und dem am Ventilkolben 9 ausgebildeten zweiten Dichtsitz 16 ein Spalt, der ein Einströmen der Atmosphäre in die Arbeitskammer 3 und somit den Aufbau einer pneumatischen Druckdifferenz im Verstärkergehäuse 1 ermöglicht.

Fig. 3 zeigt schließlich den Zustand, der nach einer Wegnahme der Betätigungskraft durch den Fahrer bei eingeschaltetem Elektromagneten 20 auftritt. In diesem Zustand wird die Funktion des ersten Dichtsitzes 15 von dem dritten Dichtsitz 24 übernommen, der gleichzeitig den Ventilkörper 10 entgegen der Betätigungsrichtung verschoben hat, so daß eine UnterStützung der vom Fahrer eingeleiteten Bremsung erfolgt ist. Die Wegnahme der Betätigungskraft bzw. der Fahrerwunsch, die Bremsung zu beenden, wird von den vorhin erwähnten elektrischen Schaltmitteln 47,48 (sog. Löseschalter) erkannt, die ein Abschalten des Elektromagneten 20 bewirken. Durch die Wirkung der Druckfeder 32 kehrt die Hülse 19 zurück in ihre Ausgangslage, so daß sowohl der am Ventilkolben 9 ausgebildete zweite Dichtsitz 16 als auch der am Steuergehäuse 5 ausgebildete erste Dichtsitz 15 geschlossen werden können.

Durch die erfindungsgemäße Ausbildung des Steuerventils 12 des fremdansteuerbaren Bremskraftverstärkers, insbesondere dadurch, daß die beiden Dichtsitze 15,16 sowie die Dichtlippe 13 identische Durchmesser aufweisen, wird erreicht, daß bei einer Fremdbetätigung des Steuerventils 12 durch den Elektromagneten 20 keine pneumatisch bedingten Kraftkomponenten wirksam werden können, da sich die Wirkungen der pneumatischen Druckdifferenz am Ventilkörper 10 gegenseitig kompensieren. Selbstverständlich sind auch andere Ausführungen des Ventilkörpers 10 denkbar; so kann anstelle der Dichtlippe 13 am Ventilköper 10 eine Rollfalte verwendet werden, die der Anbindung des Ventilkörpers 10 an das Führungsteil 21 dient.

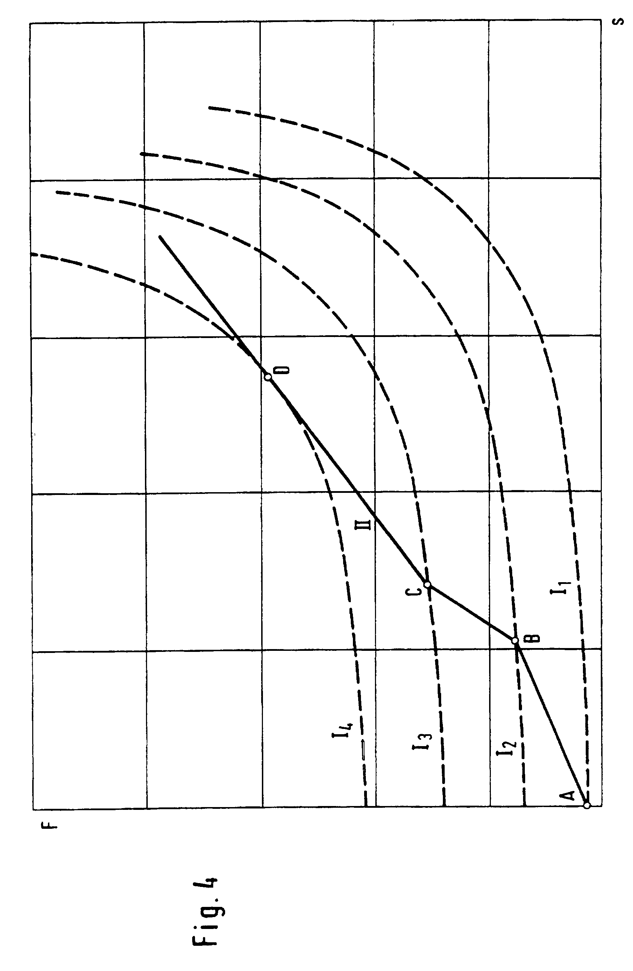

Die in Fig. 4 gezeigte diagrammatische Darstellung der Kraft-Weg-Kennlinien zeigt den Einfluß der Auslegung der die Hülse 19 vorspannenden Feder 32. Wie der Zeichnung zu entnehmen ist, zeigt der mit I₁ gekennzeichnete Verlauf eine Kraft-Weg-Kennlinie des Elektromagneten 20 bei dessen Ansteuerung mit einem ersten Stromwert, während die mit I_{2,3,4} gekennzeichneten Verläufe einer zweiten, dritten und vierten Kraft-Weg-Kennlinie des Elektromagneten 20 bei dessen Ansteuerung mit einem zweiten, dritten und vierten Stromwert entsprechen. Der mit II gekennzeichnete Verlauf stellt schließlich das Verhalten des durch den Anker 31 des Elektromagneten 20, die Feder 32, die Hülse 19, den Ventilkörper 10 sowie die Ventilfeder 22 gebildeten Verbrauchersystems dar. Der erste Abschnitt AB der Kennlinie II zeigt die Wirkung der Druckfeder 32 zwischen Hülse 19 und Ventilkolben 9, deren Kraft überwunden werden muß, bevor der dritte Dichtsitz 24 an der ersten Dichtfläche 44 des Ventilkörpers 10 zur Anlage kommt. Der zweite Abschnitt BC, der einer pneumatischen Haltephase entspricht, zeigt einen Anstieg der vom Elektromagneten 20 aufzubringenden Kraft, mit der der dritte Dichtsitz 24 in das Material der Dichtfläche 44 hineingedrückt wird, bis im Schnittpunkt C der Kennlinie II mit dem Verlauf I₃ ein Verschieben des Ventilkörpers 10 gegen die Kraft der Ventilfeder 22 und somit ein Druckaufbau im System beginnt. Der Abschnitt CD entspricht schließlich einem Bereich, in dem das Verbrauchersystem durch Änderungen der dem Elektromagneten 20 zuzuführenden Stromwerte zwischen I₃ und I₄ stabil einstellbar ist, d.h., in dem ein definierter Spalt zwischen dem zweiten Dichtsitz 16 und der zweiten Dichtfläche 45 des Ventilkörpers 10 und somit ein definierter Gradient des in der Arbeitskammer 3 herrschenden pneumatischen Druckes eingestellt werden kann. Der Berührungspunkt D der Kraft-Weg-Kennlinie I₄ mit der Verbraucherkennlinie II stellt gleichzeitig den Übergang zwischen dem stabilen Druckaufbaubereich und einem instabilen Bereich dar, in dem die Kraft-Weg-Kennlinie I₄ des Elektromagneten 20 eine deutlich größere Steigung als die Verbraucherkennlinie II aufweist und in dem die Unterstützung des Fahrers bei Panikbremsungen (sog. Bremsassistentfunktion) stattfindet. Ein stabiler Druckabbau findet im Bereich BA der Verbraucherkennlinie II statt, in dem dem Elektromagneten 20 Stromwerte zwischen I₁ und I₂ zugeführt werden.

### Bezugszeichenliste:

- 1: Verstärkergehäuse
- 2: bewegliche Wand
- 3: Arbeitskammer
- 4: Unterdruckkammer
- 5: Steuergehäuse
- 6: Reaktionsscheibe
- 7: Betätigungsstange
- 8: Membranteller
- 9: Ventilkolben
- 10: Ventilkörper
- 11: Querglied
- 12: Steuerventil
- 13: Dichtlippe
- 14: Druckstange
- 15: Dichtsitz
- 16: Dichtsitz
- 17: Raum
- 18: Rollmembran
- 19: Hülse
- 20: Elektromagnet
- 21: Führungsteil
- 22: Ventilfeder
- 23: Kopfflansch
- 24: Dichtsitz
- 25: Gehäuse
- 26: Rückstellfeder
- 27: Kolbenstangenrückholfeder
- 28: Kanal
- 29: Kanal
- 30: Verschlußteil
- 31: Anker
- 32: Feder
- 33: Übersetzungsscheibe
- 34: Raum
- 35: Fortsatz
- 36: Spule
- 37: Fläche
- 38: Anschlag
- 39: Kanal
- 40: Feder
- 41: Dichtlippe
- 42: Vorderteil
- 43: Ringraum
- 44: Dichtfläche
- 45: Dichtfläche
- 46: Spule
- 47: Mikroschalter
- 48: Betätigungselement
- 49: Anschlag
- 50: Feder

## Patentansprüche

1. Pneumatischer Bremskraftverstärker für Kraftfahrzeuge mit einem Verstärkergehäuse, dessen Innenraum durch eine bewegliche Wand in eine erste Kammer (Unterdruckkammer) und eine zweite Kammer (Arbeitskammer) unterteilt ist, sowie mit einem Steuergehäuse, in dem ein eine auf die bewegliche Wand einwirkende pneumatische Druckdifferenz steuerndes Steuerventil angeordnet ist, das einen am Steuergehäuse ausgebildeten ersten Dichtsitz, einen an einem Ventilkolben ausgebildeten zweiten Dichtsitz sowie einen an einer Hülse ausgebildeten dritten Dichtsitz aufweist, die mit einem elastischen Ventilkörper zusammenwirken, und einerseits durch eine Betätigungsstange und andererseits unabhängig von der Betätigungsstange durch einen Elektromagneten betätigbar ist, dessen Anker kraftübertragend mit dem dritten Dichtsitz zusammenwirkt, wobei der Ventilkörper auf seiner den Dichtsitzen abgewandten Seite im Steuergehäuse einen pneumatischen Raum begrenzt, **dadurch gekennzeichnet, daß** eine ständige pneumatische Verbidung zwischen dem pneumatischen Raum (17) und der Unterdruckkammer (4) vorgesehen ist und **daß** sowohl der zweite (16) und der dritte Dichtsitz (24) als auch der Ventilkörper (10) in seinem den pneumatischen Raum (17) im Steuergehäuse (5) begrenzenden Teil (Dichtlippe 13) nahezu gleiche Durchmesser aufweisen.

2. Bremskraftverstärker nach Anspruch 1 **dadurch gekennzeichnet, daß** die Durchmesser des zweiten (16) und des dritten Dichtsitzes (24) sowie des Ventilkörpers (10 bzw. 13) in einer Toleranzbreite von 1 mm liegen.

3. Bremskraftverstärker nach Anspruch 1 oder 2, **dadurch gekennzeichnet, daß** der pneumatische Raum (17) durch ein zylindrisches Teil (Führungsteil 21) begrenzt ist, das mit einer am Ventilkörper (10) ausgebildeten Dichtlippe (13) zusammenwirkt.

4. Bremskraftverstärker nach Anspruch 1 oder 2 **dadurch gekennzeichnet, daß** der pneumatische Raum (17) durch ein zylindrisches Teil begrenzt ist, an dem der Ventilkörper mittels einer Rollfalte angebunden ist, deren mittlerer Durchmesser dem des ersten sowie des dritten Dichtsitzes entspricht.

5. Bremskraftverstärker nach einem der vorhergehenden Ansprüche, **dadurch gekennzeichnet, daß** der Ventilkörper (10) zwei in Betätigungsrichtung hintereinander angeordnete, vorzugsweise ringförmig ausgeführte Dichtflächen (44,45) aufweist, an die der erste (15) und der dritte (24) bzw. der zweite Dichtsitz (16) anlegbar sind.

## Claims

1. Pneumatic brake force booster for automotive vehicles which includes a booster housing having its interior subdivided by a movable wall into a first chamber (vacuum chamber) and a second chamber (working chamber), and a control housing accommodating a control valve that controls a pneumatic pressure differential which acts upon the movable wall, the control valve comprising a first sealing seat that is provided on the control housing, a second sealing seat provided on a valve piston, and a third sealing seat provided on a sleeve, the sealing seats interacting with an elastic valve member, wherein the control valve is operable by an actuating rod, on the one hand, and by an electromagnet independently of the actuating rod, on the other hand, the armature of the electromagnet being in a force-transmitting interaction with the third sealing seat, wherein the valve member delimits a pneumatic chamber in the control housing on its side remote from the sealing seats,
**characterized in that** a permanent pneumatic connection between the pneumatic chamber (17) and the vacuum chamber (4) is provided, and **in that** both the second (16) and the third sealing seat (24) and the valve member (10) in its part (sealing lip 13) delimiting the pneumatic chamber (17) in the control housing (5) have almost identical diameters.

2. Brake force booster as claimed in claim 1,
**characterized in that** the diameters of the second (16) and the third sealing seat (24) and the valve member (10 or 13) range in a tolerance width of 1 mm.

3. Brake force booster as claimed in claim 1 or claim 2,
**characterized in that** the pneumatic chamber (17) is delimited by a cylindrical part (guide part 21) which cooperates with a sealing lip (13) designed on the valve member (10).

4. Brake force booster as claimed in claim 1 or claim 2,
**characterized in that** the pneumatic chamber (17) is delimited by a cylindrical part to which the valve member is connected by way of a rolling diaphragm having a mean diameter which corresponds to that of the first and the third sealing seat.

5. Brake force booster as claimed in any one of the preceding claims,
**characterized in that** the valve member (10) has two sealing surfaces (44, 45) which preferably have an annular configuration and are arranged one behind the other in the actuating direction, and the first (15) and the third (24) respectively the second sealing seat (16) are movable into abutment with the said sealing surfaces.

## Revendications

1. Amplificateur de force de freinage pneumatique pour véhicule automobile, comprenant un boîtier d'amplificateur, dont la cavité est divisée par une paroi mobile en une première chambre (chambre à dépression) et une seconde chambre (chambre de travail), et un boîtier de commande dans lequel est disposée une valve de commande qui commande une différence de pression pneumatique s'exerçant sur la paroi mobile et comprend un premier siège d'étanchéité réalisé sur le boîtier de commande, un deuxième siège d'étanchéité réalisé sur un piston de valve et un troisième siège d'étanchéité réalisé sur un manchon qui coopèrent avec un obturateur de valve élastique, et qui peut être actionnée d'une part au moyen d'une tige d'actionnement et d'autre part, indépendamment de la tige d'actionnement, par un électro-aimant dont l'armature mobile coopère par transmission de force avec le troisième siège d'étanchéité, tandis que, sur son côté situé à l'opposé des sièges d'étanchéité, l'obturateur de valve délimite dans le boîtier de commande un espace pneumatique, **caractérisé en ce qu'**il est prévu une liaison pneumatique permanente entre l'espace pneumatique (17) et la chambre à dépression (4) et qu'aussi bien le deuxième (16) et le troisième (24) sièges d'étanchéité qu'également l'obturateur de valve (10) dans sa partie (lèvre d'étanchéité 13) délimitant l'espace pneumatique (17) dans le boîtier de commande (5) ont des diamètres presque égaux.

2. Amplificateur de force de freinage suivant la revendication 1, **caractérisé en ce que** les diamètres des deuxième (16) et troisième (24) sièges d'étanchéité et de l'obturateur de valve (10 ou 13) sont situés dans une fourchette de tolérance de 1 mm.

3. Amplificateur de force de freinage suivant l'une quelconque des revendications 1 et 2, **caractérisé en ce que** l'espace pneumatique (17) est délimité par une pièce cylindrique (pièce de guidage 21) qui coopère avec une lèvre d'étanchéité (13) réalisée sur l'obturateur de valve (10).

4. Amplificateur de force de freinage suivant l'une quelconque des revendications 1 et 2, **caractérisé en ce que** l'espace pneumatique (17) est délimité par une pièce cylindrique à laquelle l'obturateur de valve est relié au moyen d'un repli à déroulement dont le diamètre moyen correspond à celui du premier et du troisième sièges d'étanchéité.

5. Amplificateur de force de freinage suivant l'une quelconque des revendications 1 à 4, **caractérisé en ce que** l'obturateur de valve (10) comporte deux surfaces d'étanchéité (44, 45), de préférence de forme annulaire, qui sont disposées l'une derrière l'autre suivant la direction d'actionnement et sur lesquelles respectivement les premier (15) et troisième (24) sièges d'étanchéité et le deuxième siège d'étanchéité (16) peuvent être appliqués.
